# EUROPÄISCHE PATENTSCHRIFT

(11) **EP 1 953 054 B1**
(45) Veröffentlichungstag und Bekanntmachung des Hinweises auf die Patenterteilung: **31.03.2010**
(21) Anmeldenummer: 08001757.7
(22) Anmeldetag: 31.01.2008
(51) Int. Cl.: B60T 13/68

(54) **Bremsanlage und Verfahren zum Steuern einer Bremsanlage für ein Nutzfahrzeug**
Braking assembly and method for controlling a braking assembly for a commercial vehicle
Installation de frein et procédé de commande d'une installation de frein pour un véhicule utilitaire

(30) Priorität: 31.01.2007 DE 102007004759
(43) Veröffentlichungstag der Anmeldung: 06.08.2008
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Schönmann, Kurt

(56) Entgegenhaltungen:
- EP-A- 0 726 190
- EP-A- 1 571 061
- DE-C1- 19 933 483

## Beschreibung

Die Erfindung betrifft eine Bremsanlage für ein Nutzfahrzeug, mit mindestens einer elektronischen Steuereinheit mindestens einem ersten und einem zweiten Druckluftkreis, die voneinander getrennt sind, mindestens einem Feststellbremszylinder, mindestens einer von der elektronischen Steuereinheit ansteuerbaren Feststellbremsventileinrichtung, über die eine Druckkammer des mindestens einen Feststellbremszylinders wahlweise be- und entlütfbar ist, und mindestens einem Betriebsbremszylinder, dem zum Zwecke einer Bremsung bei fehlerfreiem Betrieb der Bremsanlage Druckluft aus dem ersten Druckluftkreis zuführbar ist.

Die Erfindung betrifft weiterhin ein Verfahren zum Steuern einer Bremsanlage für ein Nutzfahrzeug, wobei die Bremsanlage mindestens eine elektronische Steuereinheit, mindestens einen ersten und einen zweiten Druckluftkreis, die voneinander getrennt sind, mindestens einen Feststellbremszylinder, mindestens eine von der elektronischen Steuereinheit ansteuerbare Feststellbremsventileinrichtung, über die eine Druckkammer des mindestens einen Feststellbremszylinders wahlweise be- und entlüftbar ist, und mindestens einen Betriebsbremszylinder aufweist, dem zum Zwecke einer Bremsung bei fehlerfreiem Betrieb der Bremsanlage Druckluft aus dem ersten Druckluftkreis zugeführt wird.

Derartige Bremsanlagen sind in der Regel mit zwei Betriebsbremskreisen ausgestattet, die der Vorderachse beziehungsweise der Hinterachse des Nutzfahrzeugs zugeordnet sind. Diese Betriebsbremskreise beziehen die für den Betrieb der Bremsanlage erforderliche Druckluft aus einem Mehrkreisschutzventil, welches verschiedene Druckluftkreise gegeneinander absichert. Neben den Betriebsbremskreisen sind dies beispielsweise die Druckluftkreise für die Feststellbremsanlage und einen Anhänger sowie Nebenverbraucherkreise. Das Mehrkreisschutzventil ist vielfach in eine elektronische Druckluftaufbereitungsanlage integriert, welche neben dem Mehrkreisschutzventil eine elektronische Steuereinheit, eine Filtereinheit und einen Druckregler als wesentliche Komponenten enthält. Erzeugt wird die Druckluft durch einen der Druckluftaufbereitungsanlage vorgelagerten Kompressor.

Die Sicherheitsanforderungen an pneumatische Bremsanlagen von Nutzfahrzeugen sind hoch. Dies betrifft insbesondere die Notwendigkeit, auf bestimmte Teilausfälle der Bremsanlage durch Gegenmaßnahmen reagieren zu können. Fällt beispielsweise ein Druckluftkreis aufgrund eines Lecks in einer Druckleitung aus, so ist es erforderlich, das Fahrzeug möglichst sicher zum Stehen zu bringen, um es dann in einer Werkstatt in Stand setzen zu können. In der Regel gelingt dies bereits aufgrund der Zweikreisigkeit der Betriebsbremsanlage. Allerdings gibt es Fahrzeuge und Situationen, in denen man mit besonderen Problemen konfrontiert ist. Dies betrifft insbesondere Fahrzeuge mit einer ungünstigen Lastverteilung auf die Achsen. Fahren beispielsweise Sattelzugmaschinen ohne Anhänger, so lassen sich diese Maschinen beim Ausfall des Druckluftkreises für die Vorderachse kaum noch beherrschen, denn die geringe auf die Hinterräder wirkende Normalkraft ist nicht ausreichend, um eine sichere Bremsung ohne weiteres alleine mit den Hinterrädern durchzuführen. Gängige Konzepte sehen daher vor, eine elektronische Feststellbremse des Fahrzeugs so auszustatten, dass sie eine Notbremsung im Falle des Ausfalls eines Betriebsbremskreises unterstützen kann. Die elektrisch ansteuerbaren Ventileinrichtungen sind daher mit einer, neben der Entlüftungs- und der Belüftungsstufe, dritten Schaltstufe ausgestattet, die dem Halten des von der Ventileinrichtung an einen Bremszylinder durchgesteuerten Druckes dient. Auf diese Weise kann ein Blockieren von Rädern, auf die eine unzureichende Normalkraft wirkt, verhindert werden. Ebenfalls ist es möglich, die elektrisch ansteuerbare Ventileinrichtung der Feststellbremse so auszustatten, dass bei Bedarf eine zusätzliche Bremswirkung zur Verfügung gestellt werden kann.

An derartigen Konzepten hat sich als nachteilig erwiesen, dass die elektrisch ansteuerbaren Ventileinrichtungen der Feststellbremse einen komplizierten Aufbau aufweisen müssen. Dies ist grundsätzlich der Sicherheit der Feststellbremseanlage nachträglich, da die Fehleranfälligkeit von Ventilen mit ihrer Komplexität ansteigt. Die Ausstattung der Feststellbremsventileinrichtung mit einer weiteren Funktionalität kann somit im Extremfall dazu führen, dass die Feststellbremse im Fehlerfall der Ventileinrichtung ihre eigentlichen Funktionen nicht mehr oder nicht zuverlässig ausführen kann.

Die EP 1 571 061 A1 zeigt eine elektrisch gesteuerte pneumatische Bremsanlage für ein Fahrzeug mit druckluftbetätigbaren Federspeicher-Bremszylindern zur Betätigung von Radbremsen. Die Bremsanlage verfügt über ein Bremssteuermodul und einen elektrisch steuerbaren Bremskreis und darüber hinaus mindestens einen als Redundanz vorgesehenen pneumatisch steuerbaren Bremskreis. Im Redundanzfall ist durch pneumatische Steuerung des Federspeicherteils des Federspeicher-Bremszylinders das Fahrzeug durch Betätigung eines Bremspedals abstufbar abbremsbar.

Die EP 0 726 190 A1 zeigt eine druckmittelbetätigte Fahrzeugbremsanlage mit einem der Hinterachse des Fahrzeugs zugeordneten ersten Bremskreis und einem der Vorderachse zugeordneten zweiten Bremskreis. Dabei sind beide Bremskreise über Steuerventileinrichtungen miteinander verbindbar, so dass bei einem Defekt in einem der Bremskreise diesem Druckluft aus dem intakten Bremskreis zugeführt werden kann.

Auch die DE 199 33 483 C1 zeigt eine druckmittelbetätigte Fahrzeugbremsanlage. Diese verfügt über einen ersten und einen zweiten Bremskreis mit jeweils einer Druckmittelquelle und einer von der zweiten Quelle unabhängigen Druckmittelquelle, die bei einem Druckabfall im zweiten Bremskreis über eine Umschaltventileinrichtung Bremszylindern des zweiten Kreises Druck zur Verfügung stellt, um eine Hilfsbremswirkung zu erzielen.

Der Erfindung liegt die Aufgabe zugrunde, eine Bremsanlage mit einer elektronischen Feststellbremse so weiterzubilden, dass eine sichere Notbremsfunktion im Falle eines Kreisdefektes und gleichzeitig eine wenig fehleranfällige Feststellbremsfunktion zur Verfügung gestellt werden können.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf der gattungsgemäßen Bremsanlage dadurch auf, dass mindestens ein von einer elektronischen Steuereinheit ansteuerbares Umschaltventil vorgesehen ist, über das im Falle eines fehlerbedingten Druckverlustes in dem ersten Druckluftkreis dem mindestens einen Betriebsbremszylinder zum Zwecke einer Notbremsung Druckluft aus dem zweiten Druckluftkreis zuführbar ist und dass die mindestens eine Feststellbremsventileinrichtung so ausgelegt ist, dass der den mindestens einen Feststellbremszylinder belüftende Schaltzustand der Feststellbremsventileinrichtung während der Notbremsung beibehaltbar ist. Auf diese Weise wird die Feststellbremsventileinrichtung von ihren Aufgaben im Hinblick auf die Notbremsung befreit. Vielmehr verbleibt die Feststellbremsventileinrichtung während der Notbremsung in einem den Feststellbremszylinder belüftenden Schaltzustand, so dass die Notbremsung von der Feststellbremse in keiner Weise beeinflusst wird. Die Notbremsung wird durch ein Umschaltventil übernommen, das im Fehlerfall Druckluft aus einem intakten Druckluftkreis bezieht und zu mindestens einem Betriebsbremszylinder durchleitet.

Nützlicherweise ist vorgesehen, dass der erste Druckluftkreis ein Betriebsbremskreis einer Vorderachse und der zweite Druckluftkreis ein Betriebsbremskreis einer Hinterachse des Nutzfahrzeugs ist. Insbesondere wird hierdurch also die Befähigung der Bremsanlage zur Verfügung gestellt, bei einem Defekt des der Vorderachse zugeordneten Betriebsbremskreises die Bremsung dennoch über die Vorderachse durchzuführen. Indem die hierfür verwendete Druckluft aus dem Betriebsbremskreis der Hinterachse bezogen wird, kann die gesamte Funktionalität der eigentlich für die Hinterachse vorgesehenen Bremsmodule genutzt werden. Insbesondere wird die Druckluft im Betriebsbremskreis der Hinterachse vielfach durch ABS- und EBS-Module gestuft bereitgestellt, so dass diese Eigenschaft auch der von dem Umschaltventil durchgesteuerten Druckluft zur Verfügung steht. Wird die Druckluft durch das Umschaltventil einer unkonditionierten Druckluftquelle entnommen, das heißt beispielsweise direkt aus einem Druckluftvorrat, so wird die für eine sichere Notbremsung erforderliche Stufbarkeit des Druckluftdurchsatzes vom Umschaltventil selbst zur Verfügung gestellt.

Gemäß einer bevorzugten Ausführungsform ist somit vorgesehen, dass der mindestens eine Betriebsbremszylinder einer Vorderachse des Nutzfahrzeugs zugeordnet ist und der mindestens eine Feststellbremszylinder einer Hinterachse des Nutzfahrzeugs zugeordnet ist.

Es ist aber auch denkbar, dass der mindestens eine Betriebsbremszylinder und der mindestens eine Feststellbremszylinder in einem Kombizylinder zusammengefasst sind. Die Vorzüge im Hinblick auf das Abbremsen von Kraftfahrzeugen mit geringer Normalkraft auf den Hinterrädern kommen dann zum Zuge, wenn der Kombizylinder der Vorderachse zugeordnet ist. Grundsätzlich kann ein nützlicher Einfluss auf eine Notbremsung aber auch im Zusammenhang mit einem der Hinterachse zugeordneten Kombizylinder erzielt werden.

Die Erfindung ist in besonders nützlicher Weise dadurch weitergebildet, dass die Feststellbremsventileinrichtung zwei stabile Schaltzustände aufweist. Der belüftende Schaltzustand der Feststellbremsventileinrichtung wurde bereits im Zusammenhang mit dem Verhalten der Feststellbremsventileinrichtung bei einer Notbremsung beschrieben. Es ist wichtig, dass dieser Zustand stabil ist, damit kein unerwünschtes Entlüften und damit abruptes Einbremsen des Kraftfahrzeugs stattfindet. Der andere Zustand, nämlich der entlüftende Zustand der Feststellbremsventileinrichtung, muss ebenfalls in stabiler Weise zur Verfügung gestellt werden, damit kein unbeabsichtigtes Belüften und damit Lösen der Feststellbremse stattfinden kann.

Dies kann so realisiert sein, dass die Schaltzustände der Feststellbremsventileinrichtung durch einen von der elektronischen Steuereinheit betätigbaren Riegelmechanismus sicherbar sind.

Ebenfalls ist es möglich, dass ein Schaltzustand der Feststellbremsventileinrichtung durch Federkraft und der andere Schaltzustand der Feststellbremsventileinrichtung durch Magnetkraft sicherbar sind.

Gemäß einer weiteren Ausführungsform ist vorgesehen, dass die Schaltzustände der Feststellbremsventileinrichtung durch Reibung sicherbar sind.

Im Zusammenhang mit einer anderen Ausführungsform der vorliegenden Erfindung ist vorgesehen, dass durch die Feststellbremsventileinrichtung ein Eingang eines Anhängersteuerventils be- und entlüftbar ist. Die Anhängerbremsanlage wird somit in das erfindungsgemäße Konzept einbezogen.

Dies gilt auch in dem Zusammenhang, dass durch die elektronische Steuereinheit eine Anhängervorsteuereinrichtung ansteuerbar ist.

Es ist von besonderem Vorzug, dass in dem ersten Druckluftkreis ein Drucksensor vorgesehen ist, der mit der elektronischen Steuereinheit in Verbindung steht. Wird durch diesen Drucksensor ein plötzlicher Abfall des Druckes in dem ersten Druckluftkreis festgestellt, so liegt mit hoher Wahrscheinlichkeit ein Leck vor. Folglich kann die elektronische Steuereinheit für das Umschalten des Umschaltventils und somit für eine Notbremsung sorgen.

Ebenfalls ist nützlicherweise vorgesehen, dass auf der Ausgangsseite der Feststellbremsventileinrichtung ein Drucksensor vorgesehen ist, der mit der elektronischen Steuereinheit in Verbindung steht. Durch diesen Drucksensor kann die elektronische Steuereinheit permanent den Zustand der Ventileinrichtung überwachen und im Bedarfsfall verändern.

Die Erfindung baut auf dem gattungsgemäßen Verfahren dadurch auf, dass mindestens ein von einer elektronischen Steuereinheit ansteuerbares Umschaltventil im Falle eines fehlerbedingten Druckverlustes in dem ersten Druckluftkreis dem mindestens einen Betriebsbremszylinder zum Zwecke einer Notbremsung Druckluft aus dem zweiten Druckluftkreis zuführt und dass die mindestens eine Feststellbremsventileinrichtung den den mindestens einen Feststellbremszylinder belüftenden Schaltzustand der Feststellbremsventileinrichtung während der Notbremsung beibehält.

Auf diese Weise werden die Vorteile und Besonderheiten der erfindungsgemäßen Bremsanlage auch im Zusammenhang mit einem Verfahren umgesetzt. Dies gilt auch für die nachfolgend beschriebenen besonders bevorzugten Ausführungsformen des erfindungsgemäßen Verfahrens.

Diese bestehen zum Beispiel darin, dass ein fehlerbedingter Druckluftverlust auf der Grundlage einer Druckmessung in dem ersten Druckluftkreis durch die elektronische Steuereinheit erfasst wird.

Weiterhin kann nützlicher Weise vorgesehen sein, dass der Schaltzustand der Feststellbremsventileinrichtung auf der Grundlage einer Druckmessung auf der Ausgangsseite der Feststellbremsventileinrichtung durch die elektronische Steuereinheit erfasst wird.

Auf der Grundlage der Erfindung steht somit eine wirkungsvolle Möglichkeit zur Unterstützung der Betriebsbremsung zur Verfügung, wobei eine sichere Funktion der Feststellbremse zur Verfügung gestellt wird. Wenn das Fahrzeug zum Stehen kommt, wobei dies wird durch ein Signal des Tachografen oder der Raddrehzahlsensoren festgestellt wird, kann die Feststellbremse durch einen einfachen Umschaltimpuls geschlossen werden. Das ist besonders hilfreich, da bei nachfolgendem Ausschalten der Zündung oder Abschalten der Batterie am Batteriehauptschalter, wie dies bei Gefahrguttransportfahrzeugen der Fall ist, die entlüftende Stellung des Ventils bei stromlos geparktem Fahrzeug erhalten bleibt. Somit baut sich auch bei kleinen Leckagen zwischen dem Vorratseingang des Feststellbremsventils und dem Federspeicheranschluss im Federspeicher kein Druck auf, so dass die Wirkung der Feststellbremse voll erhalten bleibt. Hingegen ist es während des Abbremsvorganges wichtig, dass die Feststellbremsventileinrichtung ihre belüftende Stellung behält. Kommt es während der Fahrt zu einer Verletzung von Druckluftrohren, z.B. bei Baustellenbetrieb, so kann das Umschaltventil den vorderen Bremszylinder beim Bremsen unterstützen, und zum Feststellbremszylinder kann auch bei Leckage immer noch Luft aus dem Vorratsbehälter nachströmen, so dass ein Einfallen des Zylinders verhindert wird und das Fahrzeug besser kontrollierbar bleibt.

Die Erfindung wird nun mit Bezug auf die begleitenden Zeichnungen anhand besonders bevorzugter Ausführungsformen beispielhaft erläutert.

Es zeigen:
- Figur 1: eine erste Ausführungsform einer erfindungsgemäßen Bremsanlage;
- Figur 2: eine zweite Ausführungsform einer erfindungsgemäßen Bremsanlage;
- Figur 3: eine dritte Ausführungsform einer erfindungsgemäßen Bremsanlage;
- Figur 4: eine erste Ausführungsform einer Feststellbremsventileinrichtung zur Verwendung in einer erfindungsgemäßen Bremsanlage;
- Figur 5: eine zweite Ausführungsform einer Feststellbremsventileinrichtung zur Verwendung in einer erfindungsgemäßen Bremsanlage;
- Figur 6: eine dritte Ausführungsform einer Feststellbremsventileinrichtung zur Verwendung in einer erfindungsgemäßen Bremsanlage;
- Figur 7: eine schematische Darstellung der Kopplung von Komponenten der Bremsanlage mit elektronischen Steuereinheiten; und
- Figur 8: ein Flussdiagramm zur Erläuterung eines erfindungsgemäßen Verfahrens.

Bei der nachfolgenden Beschreibung der Zeichnungen bezeichnen gleiche Bezugszeichen gleiche oder vergleichbare Komponenten.

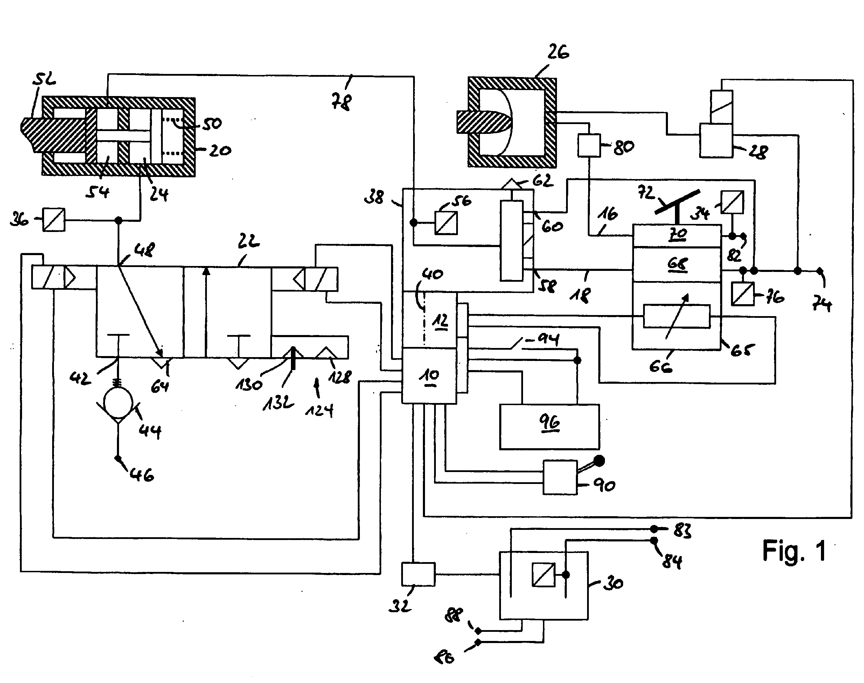

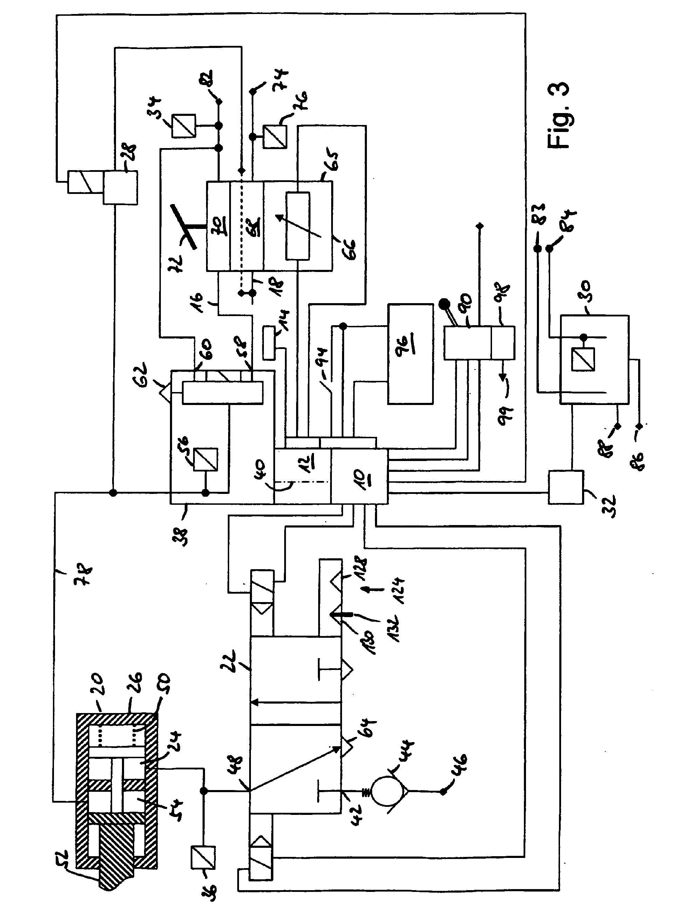

Figur 1 zeigt eine erste Ausführungsform einer erfindungsgemäßen Bremsanlage. Die Bremsanlage enthält zwei elektronische Steuereinheiten 10, 12, die über eine Schnittstelle direkt oder über einen Datenbus (CAN-Bus) miteinander in Verbindung stehen. Bei der ersten elektronischen Steuereinheit handelt es sich beispielsweise um die elektronische Steuereinheit für ein elektronisches Feststellbremssystem. Die zweite elektronische Steuereinheit 12 ist beispielsweise die elektronische Steuereinheit für ein elektronisches Bremssystem (EBS). Ebenfalls wäre möglich, nur eine einzige Steuereinheit vorzusehen, das heißt beispielsweise die Funktionalität der elektronischen Steuereinheit für das Feststellbremssystem in die elektronische Steuereinheit für das elektronische Bremssystem zu integrieren. Weiterhin können zusätzliche Steuereinheiten vorgesehen sein, die die Funktionalität des Bremssystems beeinflussen und überwachen können (siehe zum Beispiel Figur 3).

Die elektronische Steuereinheit 10 für das Feststellbremssystem steht mit einem Steuer- beziehungsweise Regelmodul, beispielsweise einem EBS-Modul 38, unter Vermittlung der elektronischen Steuereinheit 12 des elektronischen Bremssystems oder, wie dargestellt, über den CAN-Bus 40 in Verbindung.

Weiterhin ist eine Feststellbremsventileinrichtung 22 vorgesehen, die als vorgesteuertes bistabiles 3/2-Wegeventil realisiert ist. Diese Feststellbremsventileinrichtung 22 wird ebenfalls von der elektronischen Steuereinheit 10 für das Feststellbremssystem angesteuert. Um die Stabilität der Feststellbremsventileinrichtung 22 in ihren jeweiligen Schaltzuständen zu unterstützen, ist ein Riegelmechanismus 124 vorgesehen. Die Verriegelung kann beispielsweise über einen Stift 132 erfolgen, der in den Schaltzuständen der Feststellbremsventileinrichtung entsprechende Ausnehmungen 130, 128 eingreift. Der Riegelmechanismus 124 ist ebenfalls durch die elektronische Steuereinheit 10 steuerbar. Die Feststellbremsventileinrichtung 22 weist einen Drucklufteingang 42 auf, dem über ein Rückschlagventil 44 Druckluft zuführbar ist. Diese Druckluft wird einem Vorrat entnommen und beispielsweise über einen Druckluftausgang 46 einer Druckluftaufbereitungsanlage zur Verfügung gestellt. Die Feststellbremsventileinrichtung 22 weist weiterhin einen Ausgang 48 auf, der mit einer Druckkammer 24 eines Feststellbremszylinders 20 in Verbindung steht. Im dargestellten Schaltzustand der Feststellbremsventileinrichtung 22 wird die Druckkammer 24 über einen Entlüftungsausgang 64 der Feststellbremsventileinrichtung 22 entlüftet, während im anderen Schaltzustand eine Belüftung der Druckkammer 24 erfolgt. An den Ausgang 48 ist weiterhin ein Drucksensor 36 gekoppelt, wobei dessen Informationen von der elektronischen Steuereinheit 10 zur Überwachung der Feststellbremsventileinrichtung 22 und des Feststellbremszylinders 20 verarbeitet werden. Der Feststellbremszylinder 20 weist eine mit einer Feder 50 ausgestattete Federspeichereinheit auf. Im entlüfteten Zustand der Druckkammer 24 rückt die Federkraft einen Zylinderkolben 52 des den Federspeicher beherbergenden Kombizylinders aus, während im belüfteten Zustand der Druckkammer 24 die Feder 50 komprimiert wird und der Kolben 52 einrückt. Der Kombizylinder hat weiterhin eine Betriebsbremseinheit mit einer weiteren Druckkammer 54. Diese Druckkammer 54 kann unter Vermittlung des EBS-Moduls 38 be- beziehungsweise entlüftet werden, wodurch ein Ausrücken beziehungsweise Einrücken des Zylinderkolbens 52 bewirkt werden.

Das die Betriebsbremseinheit des Kombizylinders ansteuernde EBS-Modul 38 enthält einen Drucksensor, dessen Messsignale der Überwachung der EBS-Bremsvorgänge dienen. Das EBS-Modul 38 hat weiterhin einen Steuereingang 58, einen Versorgungseingang 60 und einen Entlüftungsausgang 62.

Der Steuereingang 58 des EBS-Moduls 38 steht mit einem Fußbremsmodul 65 in Verbindung. Dieses umfasst ein Elektronikmodul 66, ein Hinterachsmodul 68 und ein Vorderachsmodul 70. Bei Betätigung eines mit dem Fußbremsmodul 65 in Verbindung stehenden Pedals 72 werden sowohl das Elektronikmodul 66 als auch das Hinterachsmodul 68 und das Vorderachsmodul 70 betätigt. Das Elektronikmodul 66 liefert ein entsprechendes Signal an die elektronische Steuereinheit 12 des elektronischen Bremssystems, so dass von diesem vermittelt durch seine Kopplung zu dem EBS-Modul 38 und zu weiteren nicht dargestellten Bremsmodulen eine Bremsung elektrisch veranlasst werden kann.

Die für die Bremsung benötigte Druckluft wird über den Versorgungseingang 60 in das EBS-Modul 38 eingesteuert, wobei die hierfür benötigte Druckluft einem Ausgang 74 von beispielsweise einer Druckluftversorgungseinrichtung entnommen wird. Druckluft aus diesem Druckluftvorrat wird auch vom Hinterachsmodul 68 bei Betätigung des Pedals 72 an den Steuereingang 58 des EBS-Moduls 38 durchgesteuert, um auf diese Weise zusätzlich zur elektrisch veranlassten Bremsung einen Steuerbefehl auf pneumatischer Ebene zur Verfügung zu stellen. Der Druck in der mit dem Ausgang 74 der Druckluftversorgungseinrichtung in Verbindung stehenden Leitung wird durch einen Drucksensor 76 überwacht. Bei Betätigung des Pedals 72 kann somit vermittelt durch das Elektronikmodul und/oder das Hinterachsmodul 68 sowie das EBS-Modul 38 die Druckkammer 54 des Kombizylinders über die Leitung 78 belüftet werden, wodurch eine Bremsung der Hinterachse erfolgt.

Der Vorderachse des Nutzfahrzeugs ist ein Betriebsbremszylinder 26 zugeordnet. Auch dieser wird durch die Betätigung des Bremspedals 72 unter Vermittlung des Vorderachsmoduls 70 und/oder des Elektronikmoduls 66 belüftet. Zu diesem Zweck ist ein Bremssteuermodul 80 vorgesehen, dem Steuerdruck von dem Vorderachsmodul 70 und Versorgungsdruck (nicht dargestellt) von einem weiteren Ausgang 82, welcher von einem Drucksensor 34 überwacht wird, zugeführt werden. Das Bremssteuermodul 80 kann ähnlich ausgebildet sein wie das EBS-Modul 38. Insbesondere steht es über eine (nicht dargestellte) Steuerleitung mit der elektronischen Steuerung 12 für das elektrische Bremssystem in Verbindung, um auch unter Vermittlung des Betriebsbremszylinders 26 an der Vorderachse eine elektronische Bremsung mit pneumatischer Rückfallebene zu ermöglichen.

Der Betriebsbremszylinder 26 kann weiterhin über ein Umschaltventil 28 belüftet werden. Dieses Umschaltventil 28 wird elektrisch von der elektronischen Steuerung für das Feststellbremssystem angesteuert, und es bezieht den von ihm an den Betriebsbremszylinder 26 durchzusteuernden Druck von dem Ausgang 74 der Druckluftversorgungseinrichtung, welcher der Hinterachse zugeordnet ist. Folglich kann bei einem Druckverlust im Bremskreis für die Vorderachse, der von dem Drucksensor 34 gemessen und von der elektronischen Steuerung 10 für das Feststellbremssystem erfasst wird, Druckluft aus dem Bremskreis für die Hinterachse bezogen werden, um so dennoch eine Bremsung der Vorderachse veranlassen zu können. Das Umschaltventil 28 kann in verschiedner Weise ausgelegt sein. Im einfachsten Fall handelt es sich um ein 2/2-Wegeventil, das aus einer Sperrstellung in eine geöffnete Stellung überführt werden kann, um so den Betriebsbremszylinder 26 zu belüften. Ebenfalls kann das Umschaltventil 28 als 3/2-Wegeventil mit einer Entlüftung ausgestattet sein. Weiterhin ist es möglich, die Ausgangsleitung des Bremssteuermoduls 80 über das Umschaltventil 28 zu leiten, wobei in einem Schaltzustand des Umschaltventils der Bremsdruck von dem Bremssteuermodul 80 durchgeleitet wird und im anderen Schaltzustand der von dem Ausgang 74 bezogene Druck zur Bremsung verwendet wird. Auch in diesem Fall ist das Umschaltventil 28 mindestens als 3/2-Wegeventil auszulegen.

Mit der elektronischen Steuereinheit für die Feststellbremsanlage steht weiterhin eine Anhängervorsteuereinrichtung 32 in Verbindung. Diese dient der elektrischen Ansteuerung eines Anhängersteuerventils 30, von dem ein Versorgungsanschluss 83 und ein Steueranschluss 84 ausgehen. Das Anhängersteuerventil 30 enthält weiterhin einen Versorgungsdruckeingang 86 und einen Steuerdruckeingang 88. Der Versorgungsdruckeingang 86 kann mit demselben Druckluftausgang der Druckluftaufbereitungseinrichtung verbunden sein, wie das der Feststellbremsventileinrichtung 22 vorgelagerte Rückschlagventil 44. Der Steuerdruckeingang 88 empfängt vorzugsweise den am Ausgang 48 der Feststellbremsventileinrichtung 22 zur Verfügung gestellten Druck. Die Bremsanlage enthält weiterhin eine Handsteuereinheit 90, die elektrisch mit der elektronischen Steuereinheit 10 für das Feststellbremssystem verbunden ist und über die insbesondere eine Betätigung der Feststellbremse erfolgt. Weiterhin ist eine Batterie 96 dargestellt, die die elektronischen Steuereinheiten 10, 12 und weitere Komponenten mit Energie versorgt, wobei weiterhin der Zündungsschalter 94 einen Batteriepol mit den elektronischen Steuereinheiten 10, 12 koppelt.

Die in Figur 1 dargestellte Bremsanlage arbeitet im Hinblick auf eine Notbremsung wie folgt: Während des Fahrbetriebs des Nutzfahrzeugs befindet sich die Feststellbremsventileinrichtung 22 in der dargestellten Stellung, das heißt die Druckkammer 24 des Feststellbremszylinders 20 ist belüftet. Soll eine Bremsung herbeigeführt werden, so wird das Bremspedal 72 betätigt, so dass im fehlerfreien Fall über das EBS-Modul 38 und das Bremssteuermodul 80 Druckluft an die Druckkammer 54 und den Betriebsbremszylinder 26 durchgesteuert wird. Kommt es im Fehlerfall zu einem Druckverlust im Bereich des Anschlusses 82, der von dem Drucksensor 34 gemessen und von der elektronischen Steuereinheit 10 erfasst wird, so kann das Umschaltventil 28 umgeschaltet werden, so dass eigentlich für die Hinterachse vorgesehene Druckluft dem Betriebsbremszylinder 26 für die Vorderachse zugeführt wird, wodurch im Rahmen einer Notbremsung eine Bremsung der Vorderachse trotz defekten Vorderachsenbetriebsbremskreises erfolgen kann. Da die Druckluft bei der Ausführungsform gemäß Figur 1 zu diesem Zweck direkt dem Ausgang 74 der Druckluftversorgungsanlage entnommen wird, ist es erforderlich, das Umschaltventil 28 mit einer Funktionalität zur gestuften Durchsteuerung der Druckluft auszustatten, um auf diese Weise eine Vollbremsung zu vermeiden. Eine solche gestufte Funktionalität kann insbesondere durch ein getaktetes Umschalten des Umschaltventils 28 realisiert sein, wobei Informationen eines Raddrehzahlsensors, die einer der elektronischen Steuereinheiten 10, 12 zugeleitet werden, genutzt werden können, um die Taktung des Umschaltventils 28 zu optimieren. Während dieser Notbremsung verharrt das Feststellbremsventil 22 in seiner Position, was durch den Riegelmechanismus 124 unterstützt wird.

Im Hinblick auf die Bremsanlage des Anhängers ist zu erwähnen, dass unter Vermittlung der Handsteuereinheit 20 eine Testfunktion durchgeführt werden kann. Zu diesem Zweck weist die Handsteuereinheit 90 eine Teststellung auf, bei der Steuerdruckeingang 88 des Anhängersteuerventils 30 belüftet wird, wodurch der Steueranschluss 84 für den Anhänger entlüftet wird. Dies hat ein Lösen der Feststellbremse im Anhänger zur Folge, so dass der gesamte Zug während dieses Tests allein durch die Feststellbremse des Zugfahrzeugs gehalten werden muss. Gelingt dies, so ist davon auszugehen, dass das geparkte Fahrzeug auch bei einem Druckabbau im Anhänger und bei einem hierdurch bedingten Nachlassen der Feststellbremswirkung nicht wegrollt.

Im Hinblick auf die Handsteuereinheit 90 ist zu bemerken, dass diese nützlicherweise gestuft ausgelegt ist. Hierdurch wird bei Ausfall des Fußbremsmoduls, beispielsweise bei einem Wegbrechen des Pedals 72, eine gestufte Bremsung über die Handsteuereinheit 90 ermöglicht. Weiterhin kann durch Betätigen der Feststellbremse unter Vermittlung der elektronischen Steuereinheit 10 ein proportionales Belüften des Steuerdruckeingangs 88 des Anhängersteuerventils 30 erfolgen.

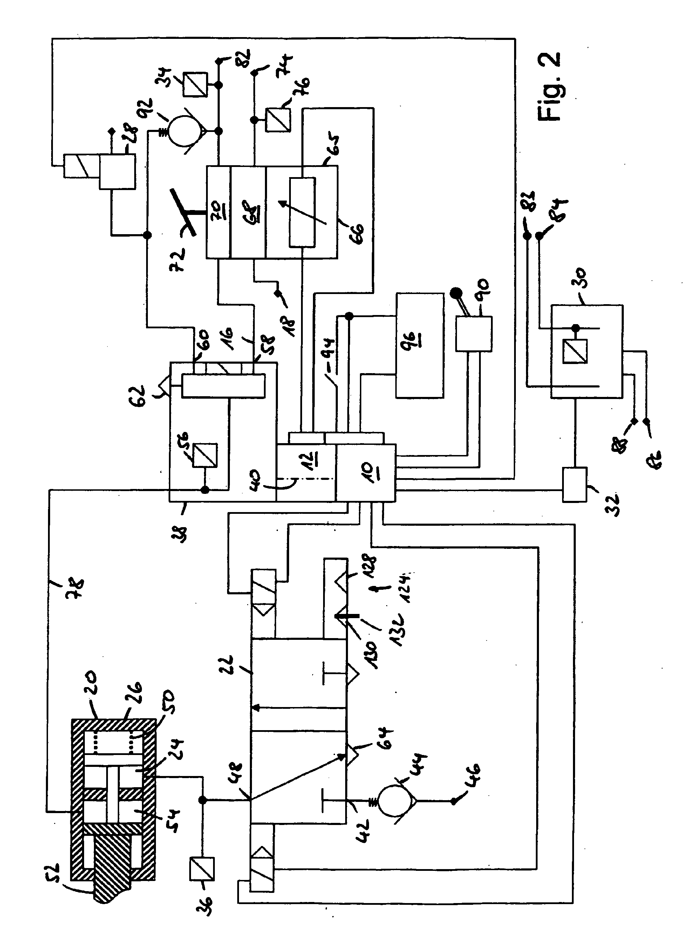

Figur 2 zeigt eine zweite Ausführungsform einer erfindungsgemäßen Bremsanlage. Das hier dargestellte System unterscheidet sich von dem System gemäß Figur 1 dadurch, dass die von dem Umschaltventil 28 herbeigeführte Notbremsung über den Kombizylinder mit Feststellbremszylinder 20 und Betriebsbremszylinder 26 vorgenommen wird. Ist der Kombizylinder der Vorderachse zugeordnet, so kann ohne Beeinflussung der Feststellbremsventileinheit eine Notbremsung unter Einbeziehung der Vorderachse erfolgen. Es ist ebenfalls möglich, dass eine Schaltung, wie sie in Figur 2 dargestellt ist, an einem Kombizylinder der Hinterachse realisiert wird. Im Gegensatz zu der Bremsanlage gemäß Figur 1 wird der von dem Umschaltventil 28 durchgesteuerte Druck nun über den Versorgungseingang 60 in das EBS-Modul 38 eingesteuert. Da das Umschalten des Umschaltventils 28 wieder dann erfolgt, wenn der Druck in der von dem Drucksensor 34 überwachten Leitung abfällt, ist ein Rückschlagventil 92 vorgesehen, um einen Druckluftverlust der über das Umschaltventil 28 zugeführten Druckluft zu vermeiden. Von dem Fußbremsmodul 65 kann in dieser Situation zwar dem Steuereingang 58 des EBS-Moduls 38 kein Steuerdruck zugeführt werden, die Bremsung kann aber auf elektronischer Ebene durch die elektronische Steuereinheit 12 veranlasst werden. Während gemäß Figur 1 das Umschaltventil 28 aus dem Bremskreis für die Hinterachse versorgt wird, kann gemäß Figur 2 diese Versorgung auch aus anderer Quelle erfolgen, beispielsweise aus einem eigens hierfür vorgesehenen Vorrat. Wesentlich ist, dass die Versorgung nicht aus dem defekten Bremskreis erfolgt.

Figur 3 zeigt eine dritte Ausführungsform einer erfindungsgemäßen Bremsanlage. Das hier dargestellte System unterscheidet sich von dem System gemäß Figur 2 dadurch, dass wiederum explizit dargestellt ist, von wo das Umschaltventil 28 seine Druckluft bezieht. Diese Bezugsquelle ist in diesem Fall wiederum der Druckluftkreis für die Hinterachse, jedoch nun ausgangsseitig des Hinterachsmoduls 68. Folglich wird dem Umschaltventil bereits druckmodulierte Luft zugeführt. Eine Modulation der Druckluft durch das Umschaltventil 28 kann daher entbehrlich sein. Weiterhin wird im Gegensatz zu Figur 2 die von dem Umschaltventil 28 durchgesteuerte Druckluft nicht dem EBS-Modul 38 zugeführt, sondern direkt der Druckkammer 54 des in den Kombizylinder integrierten Betriebsbremszylinders 26.

Ein weiterer Unterschied besteht im Zusammenhang mit der Handsteuereinheit 90. Diese weist eine eigene Energieversorgung 98 auf, so dass auch bei komplettem Ausfall der sonstigen Energieversorgung ein zumindest einmaliges betätigen der Feststellbremse möglich ist. Die Energieversorgung versorgt dabei sowohl die Handsteuereinheit 90 selbst als auch, wie durch den Pfeil 99 angedeutet, die anderen für die Betätigung der Feststellbremse erforderlichen elektrischen Verbraucher.

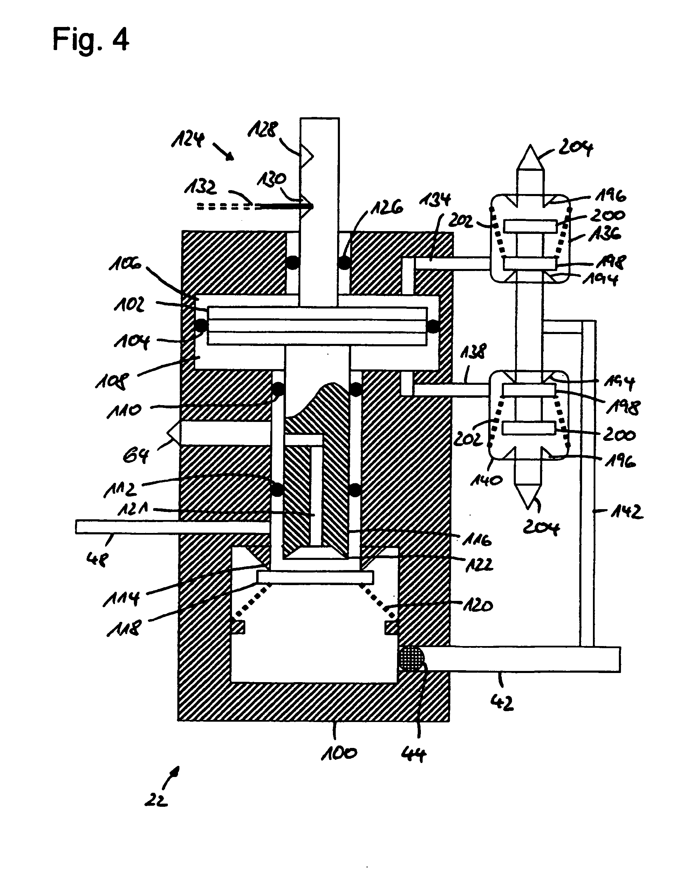

Figur 4 zeigt eine erste Ausführungsform einer Feststellbremsventileinrichtung zur Verwendung in einer erfindungsgemäßen Bremsanlage. Die in Schnittansicht dargestellte Feststellbremsventileinrichtung 22 weist ein Ventilgehäuse 100 auf, in dem Elemente zur Darstellung eines 3/2-Wegeventils angeordnet sind. Eine Steuerkolbenplatte 102, die über eine Dichtung 104 mit dem Gehäuse 100 zusammenwirkt, trennt zwei Steuerkammern 106, 108 voneinander. Von der Steuerkolbenplatte erstreckt sich durch einen Steuerraum 108 ein Steuerkolben 116, der über zwei Dichtungen 110, 112 mit dem Ventilgehäuse 100 zusammenwirkt. Zwischen den Dichtungen 110, 112 weist das Gehäuse 100 eine Entlüftungsöffnung 64 (vergleiche Figur 1) auf. Das der Steuerkolbenplatte abgewandte Ende des Steuerkolbens 116 ragt in einen mit einem Druckluftausgang 48 (vergleiche Figur 1) versehenen Ventilraum. Dieser Ausgang 48 wird durch einen mit einem Ventilsitz 114 zusammenwirkenden Ventilteller von einem Drucklufteingang 42 (vergleiche Figur 1) getrennt, wobei der Ventilteller 118 durch eine sich an dem Gehäuse 100 abstützende Feder 120 auf den Ventilsitz 114 gepresst wird. Der Steuerkolben 116 hat einen Kanal 121, der den Raum zwischen den Dichtungen 110, 112 im dargestellten Zustand mit dem dem Ventilteller 118 zugewandten Raum verbindet. Das der Steuerkolbenplatte 102 abgewandte Ende des Steuerkolbens 116 hat einen Ventilsitz 122, der mit dem Ventilteller 118 den Kanal 121 abdichtend zusammenwirken kann. An der dem Steuerkolben 116 abgewandten Seite der Steuerkolbenplatte 102 steht diese mit einer Verriegelungseinrichtung 124 in Verbindung, die mittels einer Dichtung 126 den anschließenden Steuerraum 106 gegen die Atmosphäre abdichtet. Die Verriegelungseinrichtung 124 hat zwei Ausnehmungen 128, 130, wobei in eine Ausnehmung ein Stift 132 eingreift und auf diese Weise die Position des Steuerkolbens 116 fixiert. Der erste Steuerraum 106 steht über eine Steuerleitung 134 mit einem ersten Magnetventil 136 in Verbindung, das als 3/2-Wegeventil ausgelegt ist. Der zweite Steuerraum 108 steht über eine Steuerleitung 138 mit einem identisch oder vergleichbar aufgebauten zweiten Magnetventil 140 in Verbindung. Die Magnetventile 136, 140 werden über eine Versorgungsleitung 142 mit Druckluft versorgt, wobei diese von der den Eingang 42 (vergleiche Figur 1) der Feststellbremsventileinrichtung versorgenden Leitung abzweigt. Die Magnetventile 136, 140 sind außerhalb des Ventilgehäuses 100 dargestellt. Ebenfalls ist möglich, dass diese in das Ventilgehäuse 100 integriert sind. Jedes der Magnetventile 136, 140 hat zwei Ventilsitze 194, 196, zugehörige Ventilteller 196, 200 und eine Feder 202 (vergleiche Figur 1). Am Eingang 42 der Festsstellbremsventileinrichtung 22 ist ein Rückschlagventil 44 dargestellt. Dieses kann auch, wie beispielsweise in Figur 1 dargestellt, extern vorgesehen sein.
Das Ventil gemäß Figur 4 arbeitet wie folgt: Im dargestellten Zustand sind der Ausgang der Feststellbremsventileinrichtung 22 und die Entlüftung 64 über den Kanal 121 miteinander verbunden. Dieser Zustand wird durch die Verriegelungseinrichtung 124 gesichert. Jedes der Magnetventile 136, 140 hat zwei Ventilsitze 194, 196, zugehörige Ventilteller 196, 200 und eine Feder 202 (vergleiche Figur 1). Im unbestromten Zustand der Magnetventile 136, 140 presst die Feder 202 den Ventilteller 198 auf den zugehörigen Ventilsitz 194, so dass die Steuerleitungen 134, 138 über die Entlüftungen 204 der Magnetventile entlüftet sind. Um einen der Steuerräume 106, 108 zu belüften, wird das zugehörige Magnetventil 136, 140 bestromt, so dass unter Kompression der Feder 202 der Ventilteller 200 auf dem Ventilsitz 194 aufsetzt, während die Druckluftverbindung zwischen der Versorgungsleitung 142 und dem jeweiligen Steuerraum 106, 108 freigegeben wird. Soll die Feststellbremsventileinrichtung 22 umgeschaltet werden, so wird das Magnetventil 136 kurzzeitig bestromt. Folglich wird der Steuerraum 106 belüftet, so dass der Ventilsitz 122 des Steuerkolbens 116 abdichtend mit dem Ventilteller 118 zusammenwirkt und diesen von dem Ventilsitz 114 abhebt. In diesem Zustand steht der Eingang 42 mit dem Ausgang 48 in Verbindung (vergleiche Figur 1). Auch dieser Zustand kann durch das Eingreifen des Stiftes 132 in die Ausnehmung 128 gesichert werden. Das Magnetventil 136 kann insofern wieder in seinen stromlosen Zustand überführt werden. Soll erneut umgeschaltet werden, so wird das Magnetventil 140 bestromt, was die Feststellbremsventileinrichtung 22 wieder in ihre dargestellte Position überführt. Grundsätzlich kann die Verriegelung der Feststellbremsventileinrichtung 22 aktiv erfolgen, das heißt von der elektronischen Steuereinheit beeinflusst, indem diese den Stift 132 ein- oder ausrückt. Ebenfalls ist eine passive Verriegelung denkbar, die die Position des Steuerkolbens zwar jeweils sichert, wobei der in diesem Fall elastisch vorgespannte Stift jedoch aus der Ausnehmung herausgleitet, wenn eine ausreichende Kraft in axiale Richtung auf den Steuerkolben und somit auf die Verriegelungseinrichtung aufgebracht wird.

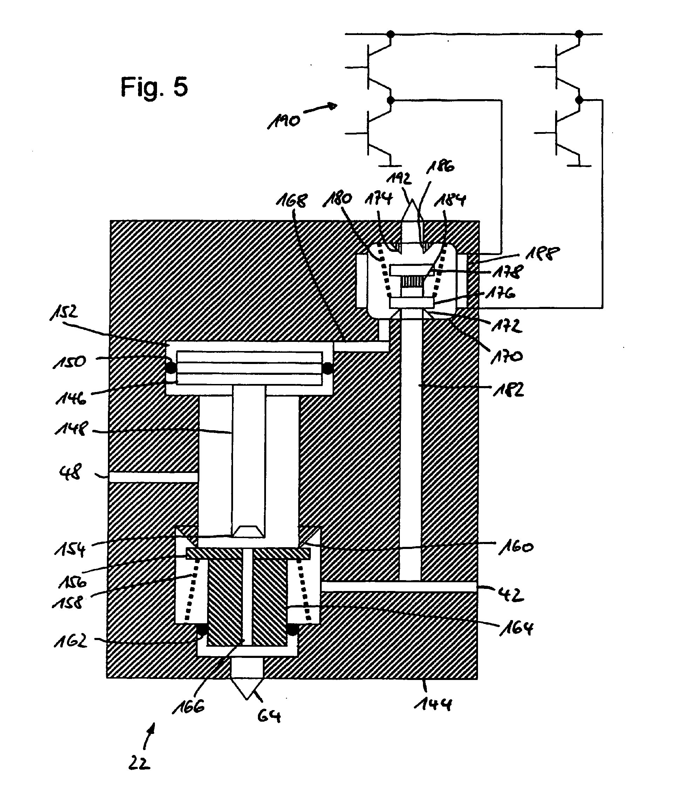

Figur 5 zeigt eine zweite Ausführungsform einer Feststellbremsventileinrichtung zur Verwendung in einer erfindungsgemäßen Bremsanlage. Die Feststellbremsventileinrichtung 22 umfasst ein Ventilgehäuse 144. Dieses enthält einen Drucklufteingang 42, einen Druckluftausgang 48 und eine Entlüftung 64 (vergleiche Figur 1). In dem Ventilgehäuse 144 ist ein mit einer Steuerkolbenplatte 146 ausgestatteter Steuerkolben 148 vorgesehen. Eine Dichtung 150, die mit der Steuerkolbenplatte 146 und dem Ventilgehäuse 144 zusammenwirkt, dichtet einen Steuerraum 152 gegen einen Raum ab, der mit dem Ausgangsanschluss 48 verbunden ist. Das der Steuerkolbenplatte 146 zugewandte Ende des Steuerkolbens 148 weist einen Ventilsitz auf, der mit einem Ventilteller 156 zusammenwirken kann. Der Ventilteller 156 wird durch eine Feder 158, die sich an dem Gehäuse 144 abstützt, auf einen weiteren Ventilsitz 160 gepresst. Der Ventilteller 156 ist an seiner dem Steuerkolben 148 abgewandten Seite mit einem Zylinder 164 ausgestattet. Der Zylinder 164 wirkt über eine Dichtung 162 mit dem Gehäuse 144 zusammen, so dass der die Feder 158 beherbergende Raum, der auch mit dem Drucklufteingang 42 in Verbindung steht, gegen die Entlüftung 64 abgedichtet ist. Der Ventilteller 156 und der Zylinder 164 weisen einen Kanal 166 auf, der dann, wenn der Ventilsitz 160 von dem Ventilteller 156 abgehoben ist, den Druckluftausgang 48 mit der Entlüftung 64 verbindet. Der Steuerraum 152 steht über eine Steuerleitung 168 mit einem bistabilen Magnetventil 170 in Verbindung. Das Magnetventil ist als 3/2-Wegeventil ausgestattet. Es enthält zwei Ventilsitze 172, 174 und zwei zugehörige miteinander in Verbindung stehende Ventilteller 176, 178. Der Ventilsitz 174 dient der Abdichtung einer Entlüftung 192. Ferner ist eine Feder 180 vorgesehen, die den Ventilteller 178 auf den Ventilsitz 172 presst, um so eine Versorgungsleitung 182, die mit dem Drucklufteingang 42 in Verbindung steht, gegen die mit dem Steuerraum 152 in Verbindung stehende Steuerleitung 168 abzudichten. Weiterhin sind Permanentmagnete 184, 186 vorgesehen. Ein Permanentmagnet 184 ist zusammen mit den Ventiltellern 176, 178 beweglich. Der andere Permanentmagnet 186 ist fest mit dem Ventilgehäuse 144 verbunden. Beispielsweise ist der fest mit dem Ventilgehäuse 144 verbundene Permanentmagnet 186 in den Ventilsitz 174 integriert. Die Permanentmagnete 184, 186 sind im Hinblick auf ihre Polung so angeordnet, dass sie sich anziehen. Eine Spule 188 des Magnetventils 170 wird von einer Transistorschaltung 190 angesteuert, so dass die Stromrichtung durch die Spule 188 umkehrbar ist.

Die Feststellbremsventileinrichtung 22 gemäß Figur 5 arbeitet wie folgt: Der dargestellte Zustand kann bei stromloser Magnetspule 188 vorliegen, indem nämlich die Feder 180 eine ausreichende Kraft aufbringt, um den Ventilteller 176 abdichtend auf seinen Sitz 172 zu pressen. Folglich ist der Steuerraum 152 entlüftet, und der Druckluftausgang 48 steht über dem Kanal 166 ebenfalls mit der Entlüftung 64 in Verbindung. Andererseits sitzt der Ventilteller 156 auf seinem Ventilsitz 160 auf, so dass der Drucklufteingang 42 nicht mit dem Druckluftausgang 48 in Verbindung steht. Zum Umschalten der bistabilen Feststellbremsventileinrichtung 22 wird die Magnetspule mit einer derart gepolten Spannung versorgt, dass aufgrund der Stromrichtung in der Magnetspule der Ventilteller 178 auf den Ventilsitz 174 gepresst wird. Aufgrund der Annäherung der Permanentmagnete 184, 186 erreicht die anziehende Magnetkraft einen Wert, der die Federkraft übersteigt. Wenn der Ventilteller 178 auf dem Ventilsitz 174 aufsitzt, kann die Magnetspule 188 in einen stromlosen Zustand überführt werden, wobei die die Entlüftung 192 abdichtende Stellung aufgrund der Magnetkraft beibehalten wird. Folglich steht die Versorgungsleitung 182 über die Steuerleitung 168 mit dem Steuerraum 152 in Verbindung, wodurch der Steuerkolben 148 mit seinem Ventilsitz 154 auf den Ventilteller 156 aufsetzt. Hierdurch wird der Druckluftausgang 48 von der Entlüftung 64 getrennt. Weiterhin hebt durch die Stößelwirkung des Steuerkolbens 148 der Ventilteller 156 von seinem Ventilsitz 160 ab, und der Eingangsanschluss 42 wird mit dem Ausgangsanschluss 48 verbunden. Um die Feststellbremsventileinrichtung 22 erneut umzuschalten, ist eine erneute Bestromung der Magnetspule erforderlich, allerdings nun mit umgekehrten Vorzeichen. Die so mit der Federkraft und der durch die Magnetkraft des Spulenfeldes aufgebrachte Kraft übersteigt dann die Magnetkraft der Permanentmagnete, so dass die Ventilteller 156, 178 wieder in ihren dargestellten Zustand überführt werden. Die Bistabilität der Feststellbremsventileinrichtung 22 gemäß Figur 5 wird demnach durch das bistabile Magnetventil 170 realisiert.

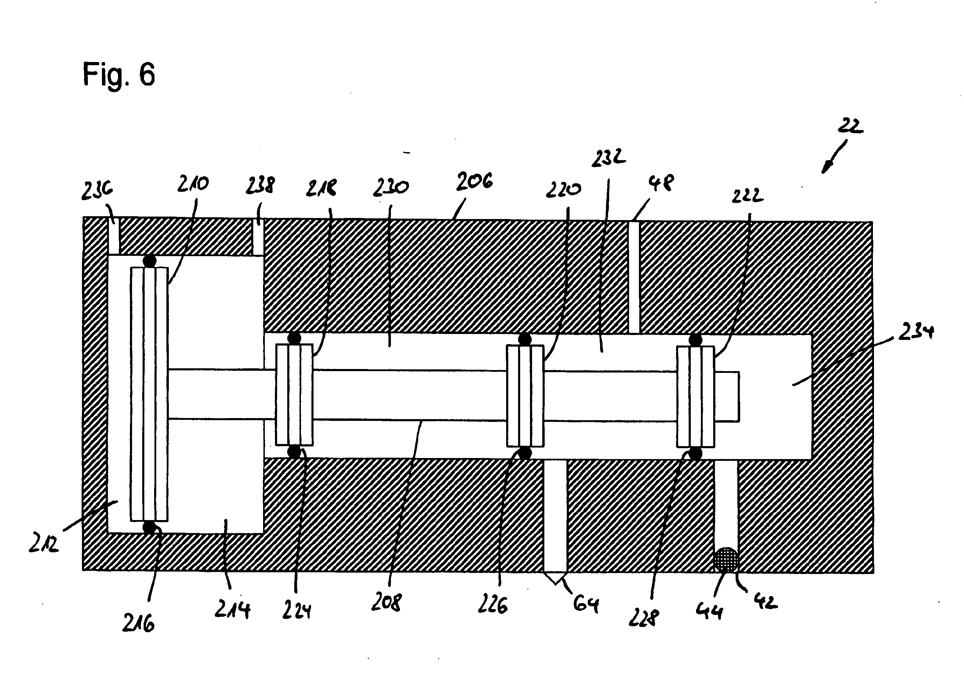

Figur 6 zeigt eine dritte Ausführungsform einer Feststellbremsventileinrichtung zur Verwendung in einer erfindungsgemäßen Bremsanlage. Die Feststellbremsventileinrichtung 22 weist ein Ventilgehäuse 206 auf, in dem ein in Schieberbauweise realisierter Steuerkolben 208 angeordnet ist. Der Steuerkolben weist an seinem einen Ende eine Steuerkolbenplatte 210 auf, die zwei Steuerräume 212, 214 unter Vermittlung einer mit der Steuerkolbenplatte 210 und dem Ventilgehäuse 206 zusammenwirkenden Dichtung 216 gegeneinander abdichtet. Weiterhin hat der Steuerkolben 208 drei Verdickungen 218, 220, 222, die jeweils über Dichtungen 224, 226, 228 mit dem Ventilgehäuse 206 zusammenwirken. Die erste Verdickung 218 dient der Abdichtung des Steuerraums 214 gegen eine erste Ventilkammer 230. Die zweite Verdickung 220 dichtet die Ventilkammer 230 gegen eine zweite Ventilkammer 232 ab, und die dritte Verdickung 222 ist zum Zwecke der Abdichtung der zweiten Ventilkammer 232 gegen eine dritte Ventilkammer 234 vorgesehen. An die Steuerräume 212, 214 schließen jeweils Steuerleitungen 236, 238 an. Diese Steuerleitungen 236, 238 stehen mit zwei nicht dargestellten monostabilen Magnetventilen in Verbindung, wie es bereits im Zusammenhang mit Figur 4 erläutert wurde. Im vorliegenden Beispiel ist das Rückschlagventil 44 (vergleiche Figur 1) wiederum in die Feststellbremsventileinrichtung 22 integriert.

Die Feststellbremsventileinrichtung 22 gemäß Figur 6 arbeitet wie folgt. Im dargestellten Zustand stehen der Druckluftausgang 48 und die Entlüftung 64 miteinander in Verbindung, während der Drucklufteingang 42 von dem Druckluftausgang 48 getrennt ist (vergleiche Figur 1). Dieser Zustand der Feststellbremsventileinrichtung ist aufgrund der durch die Vielzahl von Dichtungen vermittelten hohen Reibung stabil. Insbesondere kann der Steuerkolben 208 nicht aufgrund anderer Einflüsse als durch Druckluft, beispielsweise Rütteln oder Stoßen, verschoben werden. Zum Umschalten der Feststellbremsventileinrichtung wird der Steuerraum 212 mit Druck beaufschlagt, so dass sich der Steuerkolben 208 verschiebt. Dies hat zur Folge, dass der Druckluftausgang 48 nun mit dem Drucklufteingang 42 in Verbindung steht und nicht mehr mit der Entlüftung 64 (vergleiche Figur 1). Nach dem Verschieben des Steuerkolbens 208 kann die Druckbeaufschlagung des Steuerraums 212 beendet werden, da dieser Schaltzustand der Feststellbremsventileinrichtung 22 wiederum durch Reibung stabil ist. Zum erneuten Umschalten der Feststellbremsventileinrichtung 22, um wieder den dargestellten Zustand zu erreichen, wird der Steuerraum 214 kurzzeitig mit Druck beaufschlagt.

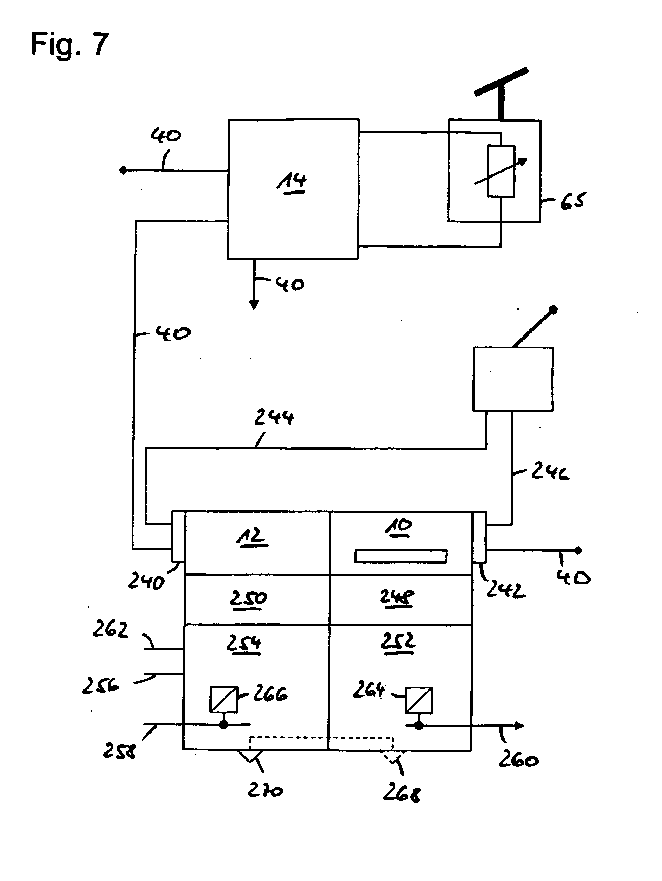

Figur 7 zeigt eine schematische Darstellung der Kopplung von Komponenten der Bremsanlage mit elektronischen Steuereinheiten. Hier wird eine mögliche Auslegung der elektrischen und elektronischen Aspekte der erfindungsgemäßen Bremsanlage erläutert. Das Fußbremsmodul 65 steht mit der elektronischen Steuereinheit 14 in Verbindung. Diese ist über den CAN-Bus 40 mit anderen nicht dargestellten Fahrzeugkomponenten verbunden und weiterhin insbesondere mit der elektronischen Steuereinheit 12 für das elektronische Bremssystem. Diese Verbindung der elektronischen Steuereinheit 14 mit der elektronischen Steuereinheit 12 für das elektronische Bremssystem erfolgt über einen ersten Stecker 240. Zusätzlich zur elektronischen Steuereinheit 12 für das elektronische Bremssystem ist eine elektronische Steuereinheit 10 für das Feststellbremssystem vorgesehen. Diese elektronischen Steuereinheiten können über eine direkte elektrische Schnittstelle miteinander in Verbindung stehen oder auch getrennt voneinander angeordnet sein und beispielsweise über den CAN-Bus elektrisch miteinander kommunizieren. Die elektronische Steuereinheit 10 für das elektronische Feststellbremssystem ist mit einem zweiten Stecker 242 ausgestattet. Dieser Stecker dient zum einen wiederum dem Anschluss an den CAN-Bus. Zum anderen sind der erste Stecker 240 und der zweite Stecker 242 für den Anschluss von jeweils einer mit der Handsteuereinheit 90 in Verbindung stehenden Signalleitung 244, 246 vorgesehen. Den elektronischen Steuereinheiten 10, 12 werden somit die Signale der Handsteuereinheit 90 redundant übermittelt, so dass im Falle eines defekten Steckers in jedem Fall eine Übermittlung der Signale an die elektronischen Steuereinheiten 10, 12 erfolgen kann. Auf diese Weise ist die Möglichkeit der Betätigung der Feststellbremseinrichtung sichergestellt, und ebenfalls kann eine Notbremsung auch bei Defekt eines Steckers über die Handsteuereinheit 90 eingeleitet werden. Die elektronische Steuereinheit 10 für das Feststellbremssystem umfasst zumindest Treiber für die anzusteuernden Magnetventile. An die elektronischen Steuereinheiten 10, 12 sind jeweils Mechatroniken und Magnetventile 248, 250 gekoppelt. Diese stehen mit pneumatischen Einheiten 252, 254 in Verbindung, die Druckluftanschlüsse 256, 258, 260, 262 und Drucksensoren 264, 266 aufweisen. Die pneumatischen Einheiten 252, 254 können getrennte Entlüftungen 268, 270 haben. Ebenfalls ist es möglich, dass eine gemeinsame Entlüftung 270 unter Vermittlung der pneumatischen Kopplung zwischen den pneumatischen Einheiten 252 verwendet wird, wobei dann die andere Entlüftung, beispielsweise Entlüftung 268 der pneumatischen Einheit 252, entbehrlich ist.

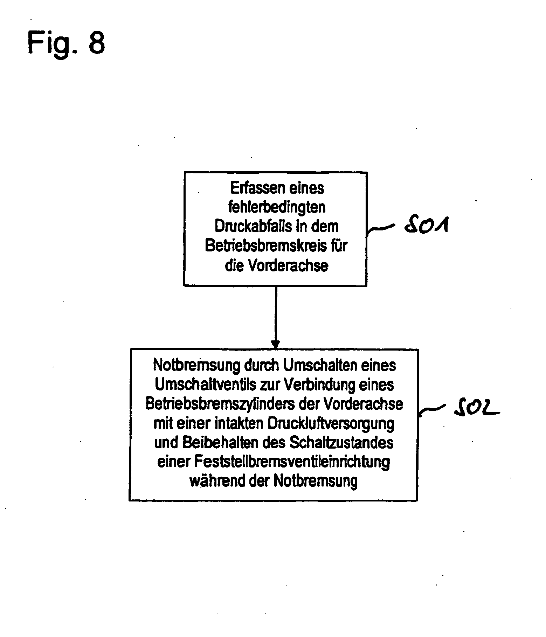

Figur 8 zeigt ein Flussdiagramm zur Erläuterung eines erfindungsgemäßen Verfahrens. In einem ersten Schritt S01 wird erfasst, dass ein fehlerbedingter Druckabfall in dem Betriebsbremskreis für die Vorderachse vorliegt. Demzufolge wird in Schritt S02 eine Notbremsung durch das Umschalten eines Umschaltventils eingeleitet, wobei hierdurch eine Verbindung eines Bremszylinders der Vorderachse mit einer intakten Druckluftversorgung, beispielsweise einem Druckluftkreis der Hinterachse, vorgenommen wird. Dabei wird der Schaltzustand der Feststellbremsventileinrichtung beibehalten, wodurch diese einfach und sicher ausgestaltet werden kann.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Steuereinheit
- 12: Steuereinheit
- 14: Steuereinheit
- 16: erster Druckluftkreis
- 18: zweiter Druckluftkreis
- 20: Feststellbremszylinder
- 22: Feststellbremsventileinrichtung
- 24: Druckkammer
- 26: Betriebsbremszylinder
- 28: Umschaltventil
- 30: Anhängersteuerventil
- 32: Anhängervorsteuereinrichtung
- 34: Drucksensor
- 36: Drucksensor
- 38: EBS-Modul
- 40: CAN-Bus
- 42: Drucklufteingang
- 44: Rückschlagventil
- 46: Druckluftaufbereitungsanlage
- 48: Druckluftausgang
- 50: Feder
- 52: Zylinderkolben
- 54: Druckkammer
- 56: Drucksensor
- 58: Steuereingang
- 60: Versorgungseingang
- 62: Entlüftungsausgang
- 64: Entlüftungsausgang
- 65: Fußbremsmodul
- 66: Elektronikmodul
- 68: Hinterachsmodul
- 70: Vorderachsmodul
- 72: Pedal
- 74: Ausgang
- 76: Drucksensor
- 78: Leitung
- 80: Bremssteuermodul
- 82: Ausgang
- 83: Versorgungsanschluss
- 84: Steueranschluss
- 86: Versorgungsdruckeingang
- 88: Steuerdruckeingang
- 90: Handsteuereinheit
- 92: Rückschlagventil
- 94: Zündschalter
- 96: Batterie
- 98: Energieversorgung
- 99: Pfeil
- 100: Ventilgehäuse
- 102: Steuerkolbenplatte
- 104: Dichtung
- 106: Steuerraum
- 108: Steuerraum
- 110: Dichtung
- 112: Dichtung
- 114: Ventilsitz
- 116: Steuerkolben
- 118: Ventilteller
- 120: Feder
- 121: Kanal
- 122: Ventilsitz
- 124: Riegelmechanismus
- 126: Dichtung
- 128: Ausnehmung
- 130: Ausnehmung
- 132: Stift
- 134: Steuerleitung
- 136: Magnetventil
- 138: Steuerleitung
- 140: Magnetventil
- 142: Versorgungsleitung
- 144: Ventilgehäuse
- 146: Steuerkolbenplatte
- 148: Steuerkolben
- 150: Dichtung
- 152: Steuerraum
- 154: Ventilsitz
- 156: Ventilteller
- 158: Feder
- 160: Ventilsitz
- 162: Dichtung
- 164: Zylinder
- 166: Kanal
- 168: Steuerleitung
- 170: Magnetventil
- 172: Ventilsitz
- 174: Ventilsitz
- 176: Ventilteller
- 178: Ventilteller
- 180: Feder
- 182: Versorgungsleitung
- 184: Permanentmagnet
- 186: Permanentmagnet
- 188: Spule
- 190: Transistorschaltung
- 192: Entlüftung
- 194: Ventilsitz
- 196: Ventilteller
- 198: Ventilsitz
- 200: Ventilteller
- 202: Feder
- 204: Entlüftung
- 206: Ventilgehäuse
- 208: Steuerkolben
- 210: Steuerkolbenplatte
- 212: Steuerraum
- 214: Steuerraum
- 216: Dichtung
- 218: Verdickung
- 220: Verdickung
- 222: Verdickung
- 224: Dichtung
- 226: Dichtung
- 228: Dichtung
- 230: Ventilkammer
- 232: Ventilkammer
- 234: Ventilkammer
- 236: Steuerleitung
- 238: Steuerleitung
- 240: Stecker
- 242: Stecker
- 244: Signalleitung
- 246: Signalleitung
- 248: Mechatronik, Magnetventile
- 250: Mechatronik, Magnetventile
- 252: pneumatische Einheit
- 254: pneumatische Einheit
- 256: Druckluftanschluss
- 258: Druckluftanschluss
- 260: Druckluftanschluss
- 262: Druckluftanschluss
- 264: Drucksensor
- 266: Drucksensor
- 268: Entlüftung
- 270: Entlüftung

## Patentansprüche

1. Bremsanlage für ein Nutzfahrzeug, mit
- mindestens einer elektronischen Steuereinheit (10, 12, 14)
- mindestens einem ersten (16) und einem zweiten Druckluftkreis (18), die voneinander getrennt sind,
- mindestens einem Feststellbremszylinder (20),
- mindestens einer von der elektronischen Steuereinheit ansteuerbaren Feststellbremsventileinrichtung (22), über die eine Druckkammer (24) des mindestens einen Feststellbremszylinders wahlweise be- und entlüftbar ist, und
- mindestens einem Betriebsbremszylinder (26), dem zum Zwecke einer Bremsung bei fehlerfreiem Betrieb der Bremsanlage Druckluft aus dem ersten Druckluftkreis zuführbar ist,
- dass mindestens ein von einer elektronischen Steuereinheit (10, 12, 14) ansteuerbares Umschaltventil (28) vorgesehen ist, über das im Falle eines fehlerbedingten Druckverlustes in dem ersten Druckluftkreis (16) dem mindestens einen Betriebsbremszylinder (26) zum Zwecke einer Notbremsung Druckluft aus dem zweiten Druckluftkreis (18) zuführbar ist und
- dass die mindestens eine Feststellbremsventileinrichtung (22) so ausgelegt ist, dass der den mindestens einen Feststellbremszylinder (20) belüftende Schaltzustand der Feststellbremsventileinrichtung während der Notbremsung beibehaltbar ist.

2. Bremsanlage nach Anspruch 1, **dadurch gekennzeichnet, dass** der erste Druckluftkreis (16) ein Betriebsbremskreis einer Vorderachse und der zweite Druckluftkreis (18) ein Betriebsbremskreis einer Hinterachse des Nutzfahrzeugs ist.

3. Bremsanlage nach Anspruch 1 oder 2, **dadurch gekennzeichnet, dass** der mindestens eine Betriebsbremszylinder (26) einer Vorderachse des Nutzfahrzeugs zugeordnet ist und der mindestens eine Feststellbremszylinder (20) einer Hinterachse des Nutzfahrzeugs zugeordnet ist.

4. Bremsanlage nach Anspruch 1 oder 2, **dadurch gekennzeichnet, dass** der mindestens eine Betriebsbremszylinder (26) und der mindestens eine Feststellbremszylinder (20) in einem Kombizylinder zusammengefasst sind.

5. Bremsanlage nach einem der vorhergehenden Ansprüche, **dadurch gekennzeichnet, dass** die Feststellbremsventileinrichtung (22) zwei stabile Schaltzustände aufweist.

6. Bremsanlage nach Anspruch 5, **dadurch gekennzeichnet, dass** die Schaltzustände der Feststellbremsventileinrichtung (22) durch einen von der elektronischen Steuereinheit betätigbaren Riegelmechanismus (28) sicherbar sind.

7. Bremsanlage nach Anspruch 5, **dadurch gekennzeichnet, dass** ein Schaltzustand der Feststellbremsventileinrichtung (22) durch Federkraft und der andere Schaltzustand der Feststellbremsventileinrichtung durch Magnetkraft sicherbar sind.

8. Bremsanlage nach Anspruch 5, **dadurch gekennzeichnet, dass** die Schaltzustände der Feststellbremsventileinrichtung (22) durch Reibung sicherbar sind.

9. Bremsanlage nach einem der vorhergehenden Ansprüche, **dadurch gekennzeichnet, dass** durch die Feststellbremsventileinrichtung (22) ein Eingang eines Anhängersteuerventils (30) be- und entlüftbar ist.

10. Bremsanlage nach einem der vorhergehenden Ansprüche, **dadurch gekennzeichnet, dass** durch die elektronische Steuereinheit (10, 12, 14) eine Anhängervorsteuereinrichtung (32) ansteuerbar ist.

11. Bremsanlage nach einem der vorhergehenden Ansprüche, **dadurch gekennzeichnet, dass** in dem ersten Druckluftkreis ein Drucksensor (34) vorgesehen ist, der mit der elektronik schen Steuereinheit (10, 12, 14) in Verbindung steht.

12. Bremsanlage nach einem der vorhergehenden Ansprüche, **dadurch gekennzeichnet, dass** auf der Ausgangsseite der Feststellbremsventileinrichtung (22) ein Drucksensor (34) vorgesehen ist, der mit der elektronischen Steuereinheit (10, 12, 14) in Verbindung steht.

13. Verfahren zum Steuern einer Bremsanlage für ein Nutzfahrzeug, wobei die Bremsanlage mindestens eine elektronische Steuereinheit (10, 12, 14), mindestens einen ersten (16) und einen zweiten Druckluftkreis (18), die voneinander getrennt sind, mindestens einen Feststellbremszylinder (20), mindestens eine von der elektronischen Steuereinheit ansteuerbare Feststellbremsventileinrichtung (22), über die eine Druckkammer (24) des mindestens einen Feststellbremszylinders wahlweise be- und entlüftbar ist, und mindestens einen Betriebsbremszylinder (26) aufweist, dem zum Zwecke einer Bremsung bei fehlerfreiem Betrieb der Bremsanlage Druckluft aus dem ersten Druckluftkreis zugeführt wird, **dadurch gekennzeichnet,**
- **dass** mindestens ein von einer elektronischen Steuereinheit (10, 12, 14) ansteuerbares Umschaltventil (28) im Falle eines fehlerbedingten Druckverlustes in dem ersten Druckluftkreis (16) dem mindestens einen Betriebsbremszylinder (26) zum Zwecke einer Notbremsung Druckluft aus dem zweiten Druckluftkreis zuführt (18) und
- **dass** die mindestens eine Feststellbremsventileinrichtung (22) den den mindestens einen Feststellbremszylinder (20) belüftenden Schaltzustand der Feststellbremsventileinrichtung während der Notbremsung beibehält.

14. Verfahren nach Anspruch 13, **dadurch gekennzeichnet, dass** ein fehlerbedingter Druckluftverlust auf der Grundlage einer Druckmessung in dem ersten Druckluftkreis (16) durch die elektronische Steuereinheit (10, 12, 14) erfasst wird.

15. Verfahren nach Anspruch 13 oder 14, **dadurch gekennzeichnet, dass** der Schaltzustand der Feststellbremsventileinrichtung auf der Grundlage einer Druckmessung auf der Ausgangsseite der Feststellbremsventileinrichtung (22) durch die elektronische Steuereinheit (10, 12, 14) erfasst wird.

## Claims

1. Braking assembly for a commercial vehicle, comprising
- at least one electronic controller (10, 12, 14)
- at least one first (16) and one second pneumatic circuit (18), which circuits are separate from each other,
- at least one parking brake cylinder (20),
- at least one parking brake valve means (22) controllable by said electronic controller, via which a pressurized chamber (24) of said at least one parking brake cylinder can selectively be ventilated and de-aerated, and
- at least one service brake cylinder (26) which is adapted to be supplied with compressed air from said first pneumatic circuit for brake application in the case of faultless operation of the braking assembly,
**characterized in**
- **that** at least one change-over valve (28) is provided, which is controllable by an electronic controller (10, 12, 14) and via which said one service brake cylinder (26) can be supplied with compressed air from said second pneumatic circuit (18) in the event of fault-induced pressure loss in said first pneumatic circuit (16), (1) for an emergency brake application cycle, and
- **that** said at least one parking brake valve means (22) is so designed that the switching condition of said parking brake valve means for ventilation of said at least one parking brake cylinder (20) may be maintained throughout the emergency brake application cycle.

2. Braking assembly according to Claim 1, **characterized in that** said first pneumatic is a service brake circuit of a front axle whilst said second pneumatic circuit (18) is a service brake circuit of a rear axle of the commercial vehicle.

3. Braking assembly according to Claim 1 or 2, **characterized in that** said at least one service brake cylinder (26) is associated with a front axle of the commercial vehicle and that said at least one parking brake cylinder (20) is associated with a rear axle of the commercial vehicle.

4. Braking assembly according to Claim 1 or 2, **characterized in that** said at least one service brake cylinder (26) and said at least one parking brake cylinder (20) are combined in one combined cylinder.

5. Braking assembly according to any of the preceding Claims, **characterized in that** said parking brake valve means (22) presents two stable switching conditions.

6. Braking assembly according to Claim 5, **characterized in that** the switching conditions of said parking brake valve means (22) are adapted to be locked by means of a locking-bar mechanism (28) operable by said electronic controller.

7. Braking assembly according to Claim 5, **characterized in that** one switching condition of said parking brake valve means (22) are adapted to be locked by application of a spring force whilst the other switching condition of said parking brake valve means is adapted to be locked by means of application of a magnetic force.

8. Braking assembly according to Claim 5, **characterized in that** the switching conditions of said parking brake valve means (22) are adapted to be locked by friction.

9. Braking assembly according to any of the preceding Claims, **characterized in that** said parking brake valve means (22) is adapted to serve for ventilation and de-aeration of one input of a trailer control valve (30).

10. Braking assembly according to any of the preceding Claims, **characterized in that** a trailer pilot control means (32) is adapted to be controlled by said electronic controller (10, 12, 14).

11. Braking assembly according to any of the preceding Claims, **characterized in that** a pressure sensor (34) is provided in said first pneumatic circuit, which communicates with said electronic controller (10, 12, 14).

12. Braking assembly according to any of the preceding Claims, **characterized in that** a pressure sensor (34) is provided on the output side of said parking brake valve means (22), which communicates with said electronic controller (10, 12, 14).

13. Method of controlling a braking assembly for a commercial vehicle, with the braking assembly comprising at least one electronic controller (10, 12, 14), at least one first (16) and one second pneumatic circuit (18), which circuits are separate from each other, at least one parking brake cylinder (20), at least one parking brake valve means (22) controllable by said electronic controller, via which a pressurized chamber (24) of said at least one parking brake cylinder can selectively be ventilated and de-aerated, and at least one service brake cylinder (26) which is adapted to be supplied with compressed air from said first pneumatic circuit for brake application in the case of faultless operation of the braking assembly, **characterized in**
- **that** at least one change-over valve (28) controllable by an electronic controller (10, 12, 14) supplies compressed air from said second pneumatic circuit (18) to said at least one service brake cylinder (26) in the event of fault-induced pressure loss in said first pneumatic circuit (16), and
- **that** said at least one parking brake valve means (22) maintains the switching condition of said parking brake valve means, which ventilates said at least one parking brake cylinder (20), throughout the emergency brake application cycle

14. Method according to Claim 13, **characterized in that** fault-induced pressure loss is detected on the basis of the pressure level gauged in said first pneumatic circuit (16) by means of said electronic controller (10, 12, 14).

15. Method according to Claim 13 or 14, **characterized in that** the switching condition of said parking brake valve means is detected on the basis of the pressure level gauged on the output side of said parking brake valve means (22) by means of said electronic controller (10, 12, 14).

## Revendications

1. Instillation de freinage pour un véhicule utilitaire comprenant
- au moins une unité (10, 12, 14) électronique de commande,
- au moins un premier (16) et un deuxième (18) circuits d'air comprimé, qui sont distincts l'un de l'autre,
- au moins un cylindre (20) de frein de stationnement,
- au moins un dispositif (22) pouvant être commandé de valve de frein de stationnement, par lequel on peut au choix alimenter en air et évacuer l'air d'une chambre (24) sous pression du au moins un cylindre de frein de stationnement, et
- au moins un cylindre (26) de frein de service, auquel on peut envoyer en vue d'un freinage, lorsque l'installation de freinage fonctionne sans défaut, de l'air comprimé provenant du premier circuit d'air comprimé,
**caractérisée**
- **en ce qu**'il est prévu au moins une vanne (28) de commutation, qui peut être commandée par une unité (10, 12, 14) électronique de commande et par laquelle dans, le cas d'une perte de pression due à un défaut dans le premier circuit (16) d'air comprimé, de l'air comprimé provenant du deuxième circuit (18) d'air comprimé peut être envoyé au au moins un cylindre (26) de frein de service en vue d'un freinage d'urgence et
- en ce que le au moins un dispositif (22) de valve de frein de stationnement est tel que l'état de commutation, donnant une alimentation en air du dispositif à valve de frein de stationnement alimentant en air un cylindre (20) de frein de stationnement, peut être conservé pendant le freinage d'urgence.

2. Installation de freinage suivant la revendication 1,
**caractérisée en ce que** le premier circuit (16) d'air comprimé est un circuit de frein de service d'un essieu avant et le deuxième circuit (18) d'air comprimé est un circuit de frein de service d'un essieu arrière du véhicule utilitaire.

3. Installation de freinage suivant la revendication 1 ou 2, **caractérisée en ce que** le au moins un cylindre (26) de frein de service est affecté à un essieu avant du véhicule utilitaire et le au moins un cylindre (20) de frein de stationnement est affecté à un essieu arrière du véhicule utilitaire.

4. Installation de freinage suivant la revendication 1 ou 2, **caractérisée en ce que** le au moins un cylindre (26) de frein de service et le au moins un cylindre (20) de frein de stationnement sont rassemblés en un cylindre combiné.

5. Installation de freinage suivant l'une des revendications précédentes, **caractérisée en ce que** le dispositif (22) à valve de frein de stationnement a deux états de commutation stables.

6. Installation de freinage suivant la revendication 5,
**caractérisée en ce que** les états de commutation du dispositif (22) à valve de frein de stationnement peuvent être bloqués par un mécanisme (28) de verrou, qui peut être actionné par l'unité électronique de commande.

7. Installation de freinage suivant la revendication 5,
**caractérisée en ce qu'**un état de commutation du dispositif (22) à valve de frein de stationnement peut être bloqué par une force de ressort et l'autre état de commutation du dispositif à valve de frein de stationnement peut être bloqué par une force magnétique.

8. Installation de freinage suivant la revendication 5,
**caractérisée en ce que** les états de commutation du dispositif (22) à valve de frein de stationnement peuvent être bloqués par frottement.

9. Installation de freinage suivant l'une des revendications précédentes, **caractérisée en ce que** l'on peut alimenter en air une entrée d'une vanne (30) de commande de remorque et en évacuer de l'air par le dispositif (22) à valve de frein de stationnement.

10. Installation de freinage suivant l'une des revendications précédentes, **caractérisée en ce qu'**un dispositif (32) de pré-commande de remorque peut être commandé par l'unité (10, 12, 14) électronique de commande.

11. Installation de freinage suivant l'une des revendications précédentes, **caractérisée en ce qu'**il est prévu, dans le premier circuit d'air comprimé, un capteur (34) de pression, qui est en liaison avec l'unité (10, 12, 14) électronique de commande.

12. Installation de freinage suivant l'une des revendications précédentes, **caractérisée en ce que**, du côté de la sortie du dispositif (22) à valve de frein de stationnement, est prévu un capteur (34) de pression, qui est en liaison avec l'unité (10, 12, 14) électronique de commande.

13. Procédé de commande d'une installation de freinage pour un véhicule utilitaire, l'installation de freinage comprenant au moins une unité (10, 12, 14) électronique de commande, au moins un premier (16) et un deuxième (18) circuits d'air comprimé, qui sont distincts l'un de l'autre, au moins un cylindre (20) de frein de stationnement, au moins un dispositif (22) à valve de frein de stationnement, qui peut être commandé par l'unité électronique de commande et par lequel on peut au choix alimenter en air une chambre (24) sous pression du au moins un cylindre de frein de stationnement et en faire sortir l'air, et au moins un cylindre (26) de frein de service, auquel on peut envoyer, en vue d'un freinage lors d'un fonctionnement sans défaut de l'installation de freinage, de l'air comprimé provenant du premier circuit d'air comprimé,
**caractérisé**
- **en ce qu**'au moins une vanne (28) de commutation, pouvant être commandée par une unité (10, 12, 14) électronique de commande, envoie (18), dans le cas d'une perte de pression due à un défaut du premier circuit (16) d'air comprimé, au au moins un cylindre (26) de frein de service, en vue d'un freinage d'urgence, de l'air comprimé provenant du deuxième circuit d'air comprimé et
- en ce qu'au moins un dispositif (22) à valve de frein de stationnement maintient, pendant le freinage d'urgence, l'état de commutation du dispositif à valve de frein de stationnement alimentant en air le au moins un cylindre (20) de frein de stationnement.

14. Procédé suivant la revendication 13, **caractérisé en ce que** l'on détecte, par l'unité (10, 12, 14) électronique de commande, une perte d'air comprimé due à un défaut sur la base d'une mesure de pression dans le premier circuit (16) d'air comprimé.

15. Procédé suivant la revendication 13 ou 14, **caractérisé en ce que** l'on détecte, par l'unité (10, 12, 14) électronique de commande, l'état de commutation du dispositif à valve de frein de stationnement sur la base d'une mesure de pression du côté de la sortie du dispositif (22) à valve de frein de stationnement.
